# EUROPEAN PATENT APPLICATION

(11) **EP 2 471 840 A1**
(43) Date of publication of application: **04.07.2012**
(21) Application number: 11195798.1
(22) Date of filing: 27.12.2011
(51) Int. Cl.: C08G 79/04, C08K 5/5337, C08L 85/02

(54) **Cross-linked polyphosphonate, method of preparing the same, and flame retardant thermoplastic resin composition including the same**

(30) Priority: 29.12.2010 KR 20100138353
(71) Applicant: Cheil Industries Inc., Gyeongsangbuk-do 730-710 (KR)
(72) Inventor: Lee, Seon Ae, Uiwang-si Gyeonggi-do (KR); Ko, Chang Hong, Uiwang-si Gyeonggi-do (KR); Hong, Sang Hyun, Uiwang-si Gyeonggi-do (KR); Lee, Min Soo, Uiwang-si Gyeonggi-do (KR)
(74) Representative: Bublak, Wolfgang

(57) **Abstract**

The present disclosure provides a cross-linked polyphosphonate. A thermoplastic resin composition using the cross-linked polyphosphonate may have excellent flame retardancy and mechanical strength and superior appearance and heat resistance.

## Description

The present invention relates to cross-linked polyphosphonate, a method of preparing the same, and a flame retardant thermoplastic resin composition including the same. More specifically, the present invention relates to cross-linked polyphosphonate, which has excellent flame retardancy even when present in a small amount, does not emit a halogenated gas and thus is environmentally friendly, does not volatilize into a monomolecular flame retardant, and exhibits excellent balance between physical properties including flame retardancy, impact strength, heat resistance and fluidity when applied to a thermoplastic resin. The present invention also relates to a method of preparing the same, and a flame retardant thermoplastic resin composition including the same.

To impart flame retardancy without use of halogen flame retardants, phosphorus flame retardants are used. Conventionally, monomolecular phosphorus flame retardants, such as triphenyl phosphate and resorcinol bisphenol phosphate, are used. However, such monomolecular phosphorus flame retardants have a low molecular weight and thus volatilize at a high molding temperature in molding plastic, causing appearance deterioration of the plastic. Further, monomolecular phosphorus flame retardants may escape into the outside environment during use of products containing the same, causing environmental contamination.

Accordingly, polyphosphonate receives increasing attention as a polymerizable phosphorus flame retardant. Polyphosphonate in a polymer form exhibits excellent flame retardancy, mechanical properties, heat resistance, and transparency and has high compatibility with a polymer resin as compared with a monomolecular phosphorus flame retardant, thus being properly applied to resins requiring high heat resistance and high transparency, particularly polycarbonate resins.

Such polyphosphonate may be prepared by deoxidation of a diol and phosphonic dichloride. In this reaction, linear polyphosphonate is produced. The linear polyphosphonate exhibits excellent flame retardancy, but has limitations in improving heat resistance and impact strength.

Thus, it is the object of the present invention to provide a cross-linked polyphosphonate which substantially improves flame retardancy even when used in a small amount, exhibits excellent balance between physical properties including flame retardancy, heat resistance, impact strength and pleasing appearance, and does not volatilize into a halogenated gas or monomolecular flame retardant, which causes environmental contamination when processed or combusted, to be environmentally friendly, and to provide a method of preparing the same. Further, aspects of the present invention provide a flame retardant thermoplastic resin composition, which uses the cross-linked polyphosphonate as a flame retardant to exhibit excellent balance between physical properties including flame retardancy, mechanical strength, pleasing appearance, and heat resistance.

Above object has been achieved by the provision of a cross-linked polyphosphonate containing a unit represented by Formula 1: 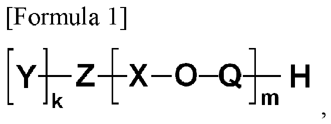 where Z represents a greater than trivalent C1 to C30 hydrocarbon residue, each Y is the same or different and is independently hydrogen, C1 to C5 linear or branched alkyl, C5 to C6 cycloalkyl or C6 to C20 aryl, each X is the same or different and is independently C1 to C5 linear or branched alkylene, C5 to C6 cycloalkylene or C6 to C20 arylene, each Q is the same or different and is independently 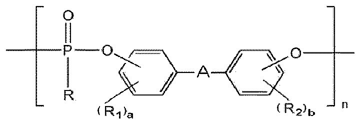 (where A represents a single bond, C1 to C5 alkylene, C1 to C5 alkylidene, C5 to C6 cycloalkylidene, -S- or ―SO2-, R is a C1 to C10 alkyl group, a C6 to C20 aryl group or a C6 to C20 aryloxy group, R₁ and R₂ each independently represent a substituted or unsubstituted C1 to C6 alkyl group, a substituted or unsubstituted C3 to C6 cycloalkyl group, a substituted or unsubstituted C6 to C12 aryl group or a halogen atom, a and b are the same or different and are each independently an integer from 0 to 4, and n represents an integer from 5 to 2,000), k represents an integer from 0 to 10, and m represents an integer from 3 to 10.

Z may be a greater than trivalent C1 to C30 alkyl radical, a greater than trivalent C5 to C30 cycloalkyl radical or a C6 to C30 aryl radical.

The cross-linked polyphosphonate may have a solubility of 0 to 0.0001 g/10ml in tetrahydrofuran when deposited at 25°C for 17 hours.

In one embodiment, the cross-linked polyphosphonate may have a weight average molecular weight of 1,000 to 300,000 g/mol.

In one embodiment, Q may be present in an amount of 50 to 98 wt% based on the total weight of the cross-linked polyphosphonate.

Furthermore, a method of preparing the cross-linked polyphosphonate is provided. The method includes polymerizing a diol and phosphonic dichloride with a crosslinker represented by Formula 4: 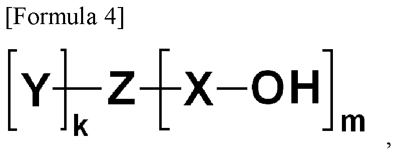 where Z represents a greater than trivalent C1 to C30 hydrocarbon residue, each Y is the same or different and is independently hydrogen, C1 to C5 linear or branched alkyl, C5 to C6 cycloalkyl or C6 to C20 aryl, each X is the same or different and is independently C1 to C5 linear or branched alkyl, C5 to C6 cycloalkyl or C6 to C20 aryl, k represents an integer from 0 to 10, and m represents an integer from 3 to 10.

The crosslinker may be reacted with the phosphonic dichloride in an equivalent ratio of 0.01 ~ 1 to 1.

In one embodiment, polymerization may be carried out in the presence of a basic catalyst.

In another embodiment, the polymerization may be carried out using interfacial polymerization in the presence of at least one catalyst selected from the group consisting of tetrabutylammonium iodide, tetrabutylammonium bromide and benzyltriphenylphosphonium chloride.

The method may further include adjusting a terminal group using a phenolic compound.

In one embodiment, the phenolic compound may be reacted with phosphonic dichloride in an equivalent ratio of 0.03 ~ 0.3 to 1.

The present invention also provides a flame retardant thermoplastic resin composition including the cross-linked polyphosphonate.

In one embodiment, the composition may include 0.01 to 30 parts by weight of the cross-linked polyphosphonate based on 100 parts by weight of thermoplastic resin.

The flame retardant thermoplastic resin composition may have an IZOD impact strength of 80 kgf· cm/cm or more as measured on a 1/8" thick specimen according to ASTM D256, a total combustion time of less than 3 seconds as measured on a 1/8" thick specimen according to UL-94, and a Vicat softening temperature (VST) of 150°C or higher as measured using a 5 kg weight according to ISO R 306.
Figure 1 shows the proton nuclear magnetic resonance results of the cross-linked polyphosphonate obtained from Preparative Example according to our invention.
Figure 2 shows the Fourier Transform Infrared Spectra of the cross-linked polyphosphonate obtained from Preparative Example according to our invention.

Cross-linked polyphosphonate according to an aspect of the present invention includes a unit represented by Formula 1: 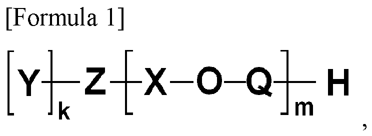 where Z represents a greater than trivalent C1 to C30 hydrocarbon residue, each Y is the same or different and is independently hydrogen, C1 to C5 linear or branched alkyl,

C5 to C6 cycloalkyl or C6 to C20 aryl, each X is the same or different and is independently C1 to C5 linear or branched alkylene, C5 to C6 cycloalkylene or C6 to C20 arylene, each Q is the same or different and is independently 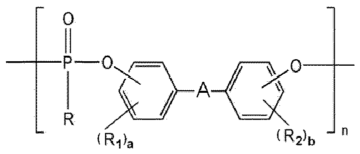 (where A represents a single bond, C1 to C5 alkylene, C1 to C5 alkylidene, C5 to C6 cycloalkylidene, -S- or ―SO2-, R is a C1 to C10 alkyl group, a C6 to C20 aryl group or a C6 to C20 aryloxy group, R₁ and R₂ each independently represent a substituted or unsubstituted C1 to C6 alkyl group, a substituted or unsubstituted C3 to C6 cycloalkyl group, a substituted or unsubstituted C6 to C12 aryl group or a halogen atom, a and b are the same or different and are each independently an integer from 0 to 4, and n represents an integer from 5 to 2,000), k represents an integer from 0 to 10, and m represents an integer from 3 to 10.

Z may be a greater than trivalent C1 to C30 alkyl radical, a greater than trivalent C5 to C30 cycloalkyl radical, or a C6 to C30 aryl radical. Specifically, Z may be a tetravalent to heptavalent, for example, tetravalent or pentavalent, C1 to C30 alkyl radical, a C5 to C30 cycloalkyl radical, or a C6 to C30 aryl radical.
k may be an integer from 0 to 2.
n may be an integer from 10 to 1,500.
m may be an integer from 3 to 5.

In one embodiment, Z may be represented by the following units: 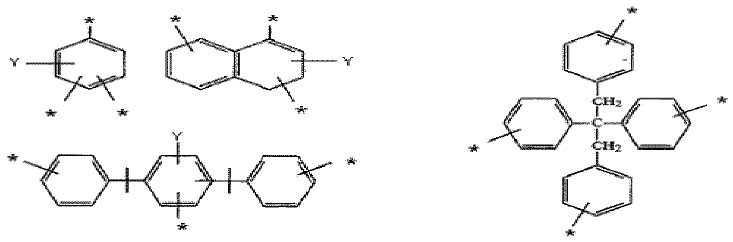 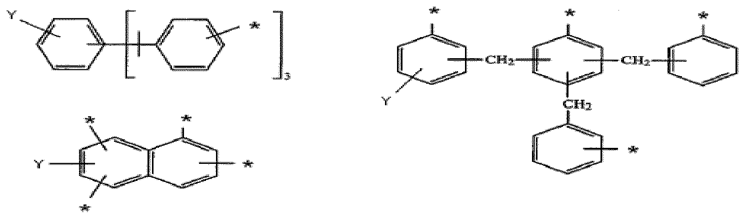 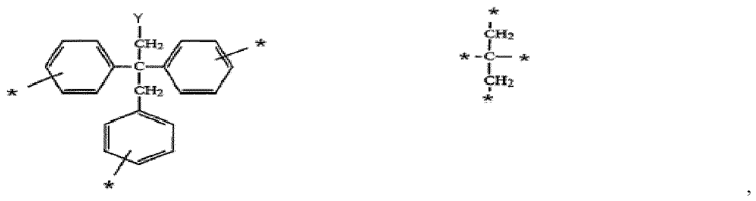 where * is 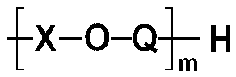 as defined herein and wherein Y is the same defined herein.

Specifically, Formula 1 may have a unit represented by Formula 1-1: 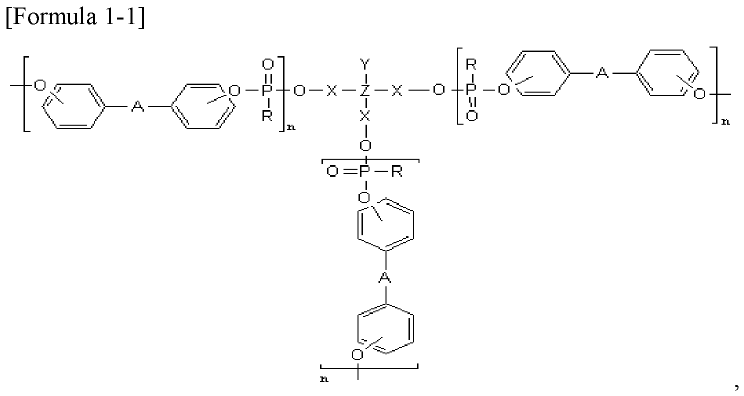 where Z represents C1 to C5 linear or branched alkyl, C5 or C6 cycloalkyl, or C6 to C20 aryl, each Y is the same or different and is independently hydrogen, C1 to C5 linear of branched alkyl, C5 or C6 cycloalkyl, or C6 to C20 aryl, each X is the same or different and is independently C1 to C5 linear or branched alkylene, C5 or C6 cycloalkylene, or C6 to C20 arylene, A represents a single bond, C1 to C5 alkylene, C1 to C5 alkylidene, C5 or C6 cycloalkylidene, -S-, or ―SO2-, each R the same or different and is independently is a C1 to C10 alkyl group, a C6 to C20 aryl group, or a C6 to C20 aryloxy group, and each n is the same or different and is independently an integer from 5 to 2,000.

The cross-linked polyphosphonate has a solubility of 0 to 0.0001 g/10ml in tetrahydrofuran when deposited at 25°C for 17 hours. A linear polyphosphonate has a solubility of 0.01 to 0.4 g/10ml in tetrahydrofuran when deposited at 25°C for 17 hours.

The cross-linked polyphosphonate may have a weight average molecular weight of 1,000 to 300,000 g/mol. In the present invention, the weight average molecular weight is measured by GPC using a Waters 515.

In one embodiment, a unit Q may be present in an amount of 50 to 98 wt%, preferably 60 to 90 wt% in the entirety of the cross-linked polyphosphonate. Within this range, the resin composition can exhibit excellent flame retardancy and property balance.

The cross-linked polyphosphonate may be prepared by polymerization of a diol and phosphonic chloride with a polyol having at least three hydroxyl groups as a crosslinker.

In one embodiment, the diol may be represented by Formula 2: 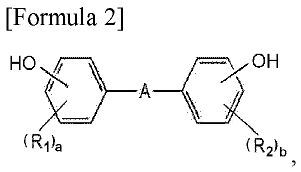 where A represents a single bond, C1 to C5 alkylene, C1 to C5 alkylidene, C5 to C6 cycloalkylidene, -S- or ―SO2-, R₁ and R₂ each independently represent a substituted or unsubstituted C1 to C6 alkyl group, a substituted or unsubstituted C3 to C6 cycloalkyl group, a substituted or unsubstituted C6 to C12 aryl group or a halogen atom, and a and b are the same or different and are each independently an integer from 0 to 4.

Examples of the diol may include 4,4'-dihydroxydiphenyl, 2,2-bis-(4-hydroxyphenyl)-propane, 2,4-bis-(4-hydroxyphenyl)-2-methylbutane, 1,1-bis-(4-hydroxyphenyl)-cyclohexane, 2,2-bis-(3-chloro-4-hydroxyphenyl)-propane, and 2,2-bis-(3,5-dichloro-4-hydroxyphenyl)-propane. Further, as a diphenol compound, hydroquinone and resorcinol may be used. Among these, bisphenols such as 2,2-bis-(4-hydroxyphenyl)-propane, 2,2-bis-(3,5-dichloro-4-hydroxyphenyl)-propane, and 1,1-bis-(4-hydroxyphenyl)-cyclohexane are preferable; and 2,2-bis-(4-hydroxyphenyl)-propane, referred to as bisphenol A, is more preferable.

The phosphonic dichloride may be represented by Formula 3: 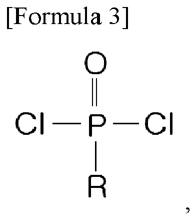 where R represents a C6 to C20 aryl group or C6 to C20 aryloxy group.

Specifically, the phosphonic dichloride may be reacted with the diol in an equivalent ratio of 1 to 1.

The crosslinker may be represented by Formula 4: 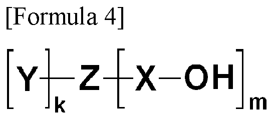 where Z represents a greater than trivalent C1 to C30 hydrocarbon residue, each Y is the same or different and is independently hydrogen, C1 to C5 linear or branched alkyl, C5 to C6 cycloalkyl or C6 to C20 aryl, each X is the same or different and is independently C1 to C5 linear or branched alkyl, C5 to C6 cycloalkyl or C6 to C20 aryl, k represents an integer from 0 to 10, and m represents an integer from 3 to 10.

Z may be a greater than trivalent C1 to C30 alkyl radical, a greater than trivalent C5 to C30 cycloalkyl radical, or a greater than trivalent C6 to C30 aryl radical. Specifically, Z may be a tetravalent to heptavalent, for example, tetravalent or pentavalent, C1 to C30 alkyl radical, a greater than trivalent C5 to C30 cycloalkyl radical, or a C6 to C30 aryl radical.

k may be an integer from 0 to 2.
n may be an integer from 10 to 1,500.
m may be an integer from 3 to 5.

Examples of the crosslinker may include 1,1,1-tris(4-hydroxyphenyl)ethane, 3- or 4-hydroxy aromatic compounds including 4-hydroxybutyl acrylate, trimethylolpropane, trimethylolethane, pentaerythritol, oxypropylated ethylene diamine, ditrimethylolpropane, dipentaerythritol, and glycerin, without being limited thereto. These crosslinkers may be used alone or in combination of two or more thereof.

The crosslinker may be reacted with the phosphonic dichloride in an equivalent ratio of 0.01 ~ 1 to 1. Within this range, post-treatment can be simplified.

In one embodiment, reaction of the diol and the phosphonic dichloride may be carried out by a general method in the presence of a basic catalyst. For example, dimethylaminopyridine and alkali metal hydroxides may be used as a catalyst, without being limited thereto. The catalyst may be reacted with the phosphonic dichloride in an equivalent ratio of 0.03 ~ 0.3 to 1, preferably 0.05 ~ 0.1 to 1. The amount of the cross-linked polyphosphonate may increase according to the amount of the catalyst. However, if the cross-linked polyphosphonate is added in an equivalent ratio of greater than 0.3 to 1, the increase rate can be decreased.

In another embodiment, polymerization may be carried out by interfacial polymerization using a phase transfer catalyst. Examples of the phase transfer catalyst may include tetrabutylammonium iodide, tetrabutylammonium bromide and benzyltriphenylphosphonium chloride, without being limited thereto. Specifically, benzyltriphenylphosphonium chloride may be used.

The reaction may be carried out at -40 to 40°C, preferably -10 to 5°C. Further, the reaction may be carried out in a nitrogen atmosphere. Reaction time may be 1 to 24 hours, preferably 2 to 3 hours.

Applicable solvents in the reaction may include methylene chloride, 1,2-dichloroethane, and dichlorobenzene, without being limited thereto. In one embodiment, dichloroethane and water may be used together.

In one embodiment, hydrochloric acid generated in the course of polymerization may be neutralized with an alkali solution. Here, examples of the alkali solution may include a sodium hydroxide solution and a potassium hydroxide solution.

In another embodiment, after the polymerization reaction is terminated, adjusting a terminal group with a phenolic compound may further be carried out. In one embodiment, the phenolic compound may be reacted with the phosphonic dichloride in an equivalent ratio of 0.03 ~ 0.3 to 1, preferably 0.04 ~ 0.08 to 1. 4-cumylphenol may be used as the phenolic compound.

Alternatively, after the polymerization reaction is terminated, post-treatment with alkylene oxide may further be carried out. The alkylene oxide may be added in an equivalent of 2 to 7, preferably 3 to 5 of the acid value of the reaction product. By conducting post-treatment with the alkylene oxide, the acid value of the final product may be remarkably reduced and decomposition of a mixed resin may be prevented.

The cross-linked polyphosphonate thus prepared may be obtained via washing, solidification, and drying.

Another aspect of the present invention relates to a flame retardant thermoplastic resin composition including cross-linked polyphosphonate.

In one embodiment, the composition may include 0.01 to 30 parts by weight of the cross-linked polyphosphonate based on 100 parts by weight of a thermoplastic resin.

There is no particular limitation as to the kind of the thermoplastic resin. Examples of the thermoplastic resin may include a styrene resin, a polyester resin, a (meth)acrylate resin, a polyamide resin, a polyphenylene ether resin, a polycarbonate resin, a polyolefin resin, and a polyvinyl chloride resin, without being limited thereto. These resins may be used alone or in combination of two or more thereof. The cross-linked polyphosphonate prepared by the method according to the present invention exhibits excellent mechanical strength and has flame retardancy, heat resistance and transparency and thus may be properly applied to resins requiring high heat resistance and high transparency, particularly polycarbonate.

In one embodiment, the flame retardant thermoplastic resin composition may include 0.01 to 30 parts by weight, preferably 0.1 to 15 parts by weight, and more preferably 0.5 to 10 parts by weight of the cross-linked polyphosphonate based on 100 parts by weight of polycarbonate resin.

In one embodiment, the flame retardant thermoplastic resin composition may have an IZOD impact strength of 80 kgf· cm/cm or more measured on a 1/8" thick specimen according to ASTM D256, a total combustion time of less than 3 seconds as measured on a 1/8" thick specimen according to UL-94, and a Vicat softening temperature (VST) of 150°C or higher as measured using a 5 kg weight according to ISO R 306.

For example, the flame retardant thermoplastic resin composition may have an IZOD impact strength of 82 to 150 kgf· cm/cm or more as measured on a 1/8" thick specimen according to ASTM D256, a total combustion time of less than 0 to 2 seconds as measured on a 1/8" thick specimen according to UL-94, and a Vicat softening temperature (VST) of 150 to 180°C or higher as measured using a 5 kg weight according to ISO R 306.

The thermoplastic resin composition having excellent flame retardancy may further include an additive depending on the purpose thereof. Examples of the additive may include an auxiliary flame retardant, a lubricant, a plasticizer, a heat stabilizer, an antidripping agent, an antioxidant, a compatibilizer, a light stabilizer, a pigment, a dye, and an inorganic additive, without being limited thereto. These additives may be used alone or in combination of two or more thereof. Examples of the inorganic additive may include asbestos, glass fiber, talc, ceramic, and sulfates. The additive may be present in an amount of 30 parts by weight or less, for example 0.01 to 25 parts by weight based on 100 parts by weight of the base resin.

The thermoplastic resin composition having excellent flame retardancy may be prepared by a general method of preparing a resin composition. For example, the components and other additives may be mixed at the same time and melt-extruded into pellets or chips using an extruder.

A further aspect of the invention provides a plastic molded article formed of the thermoplastic resin composition having excellent flame retardancy. The thermoplastic resin composition has excellent flame retardancy and superior heat resistance and thus may be widely used for manufacturing housings of electric and electronic products, such as TVs, stereo systems, cellular phones, digital cameras, navigation systems, washing machines, computers, monitors, MP3 players, video players, CD players and dishwashers, office automation equipment, and other large-sized injection molded products.

There is no particular limitation as to a method of molding a plastic molded article using the thermoplastic resin composition. For example, extrusion, injection, or casting molding methods may be used. The molding may be readily carried out by a person having ordinary skill in the art to which the present invention pertains.

Next, the present invention will be explained in more detail with reference to the following examples. These examples are provided for illustrative purposes only and are not to be in any way construed as limiting the present invention.

### Examples

### Preparative Example: Preparation of cross-linked polyphosphonate

2,2-bis-(4-hydroxyphenyl)-propane (100 g, 0.438 mol), 1,1,1-tris(4-hydroxyphenyl)ethane (2.68 g, 0.009 mol) and phenol (4.12 g, 0.44 mol) were dissolved in a IN aqueous potassium hydroxide solution, and then the mixture solution was cooled to 0°C. Phenylphosphonic dichloride (85.4 g, 0.438 mol) and methylene chloride were gently dropped to the mixture solution and stirred for 2 hours. The product was washed twice with methylene chloride and distilled water. Then, a methylene chloride layer was isolated, concentrated under reduced pressure, and deposited in hexane, thereby obtaining white solid cross-linked polyphosphonate at a yield of 92 %.

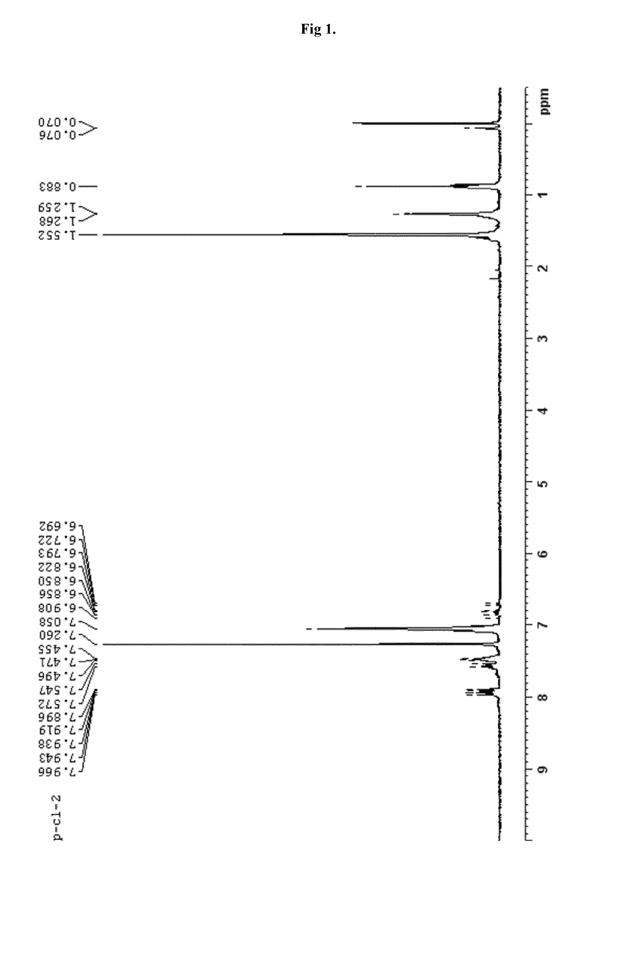

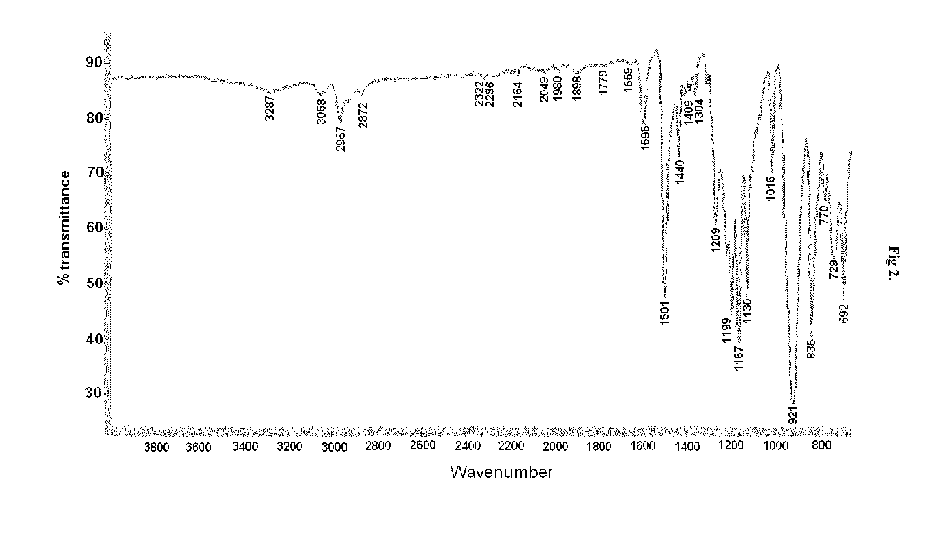

The produced cross-linked polyphosphonate was analyzed as follows.
(1) Proton NMR: NMR from Bruker AVANCE III & Ultrashield Magnet was used, and results are shown in Fig. 1.
(2) IR: A Fourier Transform Infrared Spectrometer was used, and results are shown in Fig. 2.
(3) Molecular weight (g/mol): Number average molecular weight (Mn) and weight average molecular weight (Mw) were measured by GPC (using WATERS 515 and Shodex LF-804 columns), after which PDI (Mw/Mn) was calculated and results are shown in Table 1.
(4) Thermogravimetric analysis: Thermogravimetric analysis (TGA, Equipment:
   METTLER TOLEDO) and differential scanning calorimetry (DSC, Equipment: DSC Q100 TA INSTRUMENTS) were used, and results are shown in Table 1.
(5) Solubility: The cross-linked polyphosphonate prepared in Preparative Example was deposited in tetrahydrofuran at 25 °C for 17 hours, followed by measuring solubility.

**Table 1**

| Molecular weight (Kg/mol) | | | Thermogravimetric analysis | | | Solubility in THF mg/100ml |
|---|---|---|---|---|---|---|
| Mn | Mw | PDI | Temperature of fast degradation | Char percentage at 700°C | Transition Temperature | |
| 21 | 56 | 2.7 | 330°C - 630°C | 18wt% | 116°C | 2 |

### Examples 1 to 3: Preparation of thermoplastic resin composition

The cross-linked polyphosphonate prepared in Preparative Example was added according to compositions listed in Table 2 to 100 parts by weight of polycarbonate having a weight average molecular weight of 25,000 g/mol (PANLITE L-1250W, Teijin Kasei K.K., Japan), followed by extrusion at 200 to 280°C using a general biaxial extruder, thereby preparing pellets. These pallets were dried at 70°C for 2 hours and formed into a specimen using a 10 oz injection molder at a molding temperature of 180 to 280°C and a mold temperature of 40 to 80°C.

Physical properties of the prepared specimens were evaluated as follows, and results are shown in Table 2.
(1) Flame retardancy: Flame retardancy was measured on a 1/8" thick specimen according to UL 94 VB standards.
(2) Total combustion time: Total combustion time was measured on a 1/8" thick specimen according to UL 94 standards.
(3) Heat resistance: Vicat softening temperature (VST) was measured using a 5 kg weight according to ISO R 306.
(4) IZOD impact strength: IZOD impact strength was measured on a 1/8" thick notched specimen at room temperature according to ASTM D256 (kgf·cm/cm).

**Table 2**

| | Example 1 | Example 2 | Example 3 |
|---|---|---|---|
| Polycarbonate resin | 100 | 100 | 100 |
| Cross-linked polyphosphonate | 2 | 3 | 5 |

| Flame retardancy (UL94, 1/8") | V-0 | V-0 | V-0 |
|---|---|---|---|
| Total combustion time (sec) | 1 | 0 | 0 |
| Heat resistance (°C) | 151 | 151 | 150 |
| IZOD (room temperature) | 85 | 83 | 82 |

### Comparative Examples 1 to 9

The same process as in Example 1 was carried out except that the following flame retardants were used according to compositions listed in Table 3 instead of the cross-linked polyphosphonate. Results of measurement are shown in Table 3.

**Table 3**

| | | Comparative Example | | | | | | | | |
|---|---|---|---|---|---|---|---|---|---|---|
| | | 1 | 2 | 3 | 4 | 5 | 6 | 7 | 8 | 9 |
| PC | | 100 | 100 | 100 | 100 | 100 | 100 | 100 | 100 | 100 |
| Flame retardant | (a) | 2 | 3 | 5 | - | - | - | - | - | - |
| Flame retardant | (b) | - | - | - | 2 | 3 | 5 | - | - | - |
| Flame retardant | (c) | - | - | - | - | - | - | 2 | 3 | 5 |
| Flame retardancy | | V-2 (drip) | V-2 (drip) | V-2 (drip) | V-2 (drip) | V-2 (drip) | V-2 (drip) | V-0 | V-0 | V-0 |
| Total combustion time (sec) | | 48 | 34 | 26 | 61 | 45 | 32 | 11 | 3 | 1 |
| Heat resistance (°C) | | 141 | 139 | 131 | 144 | 140 | 138 | 145 | 144 | 141 |
| IZOD (room temperature) | | 68 | 66 | 63 | 78 | 75 | 71 | 80 | 77 | 76 |
| (a) CR-741S (Trade name, Daihachi, Japan) | | | | | | | | | | |
| (b) PX-200 (Trade name, Daihachi, Japan) | | | | | | | | | | |
| (c) Polyphosphonate having molecular weight (Mw) of 12,000 obtained by reaction of 2,2-bis-(4-hydroxyphenyl)-propane with phenylphosphonic acid dichloride and substitution of a terminal group by 4-cumylphenol | | | | | | | | | | |

As shown in Tables 2 and 3, the thermoplastic resin compositions using the cross-linked polyphosphonate according to Examples 1 to 3 have excellent flame retardancy, heat resistance, and impact strength. However, the compositions using monomolecular flame retardants according to Comparative Examples 1 to 6 have deteriorated flame retardancy of V-2 or a decreased total combustion time, and the compositions using a linear polyphosphonate according to Comparative Examples 7 to 9 also have reduced heat resistance and impact strength.

Although some embodiments have been disclosed herein, it should be understood that these embodiments are provided by way of illustration only, and that various modifications, changes, and alterations can be made without departing from the spirit and scope of the invention. Therefore, the scope of the invention should be limited only by the accompanying claims and equivalents thereof.

## Claims

1. Cross-linked polyphosphonate comprising a unit represented by Formula 1: 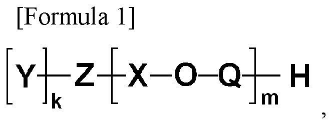 where Z represents a greater than trivalent C1 to C30 hydrocarbon residue,
each Y is the same or different and is independently hydrogen, C1 to C5 linear or branched alkyl, C5 to C6 cycloalkyl or C6 to C20 aryl, each X is the same or different and is independently C1 to C5 linear or branched alkylene, C5 to C6 cycloalkylene or C6 to C20 arylene, each Q is the same or different and is independently 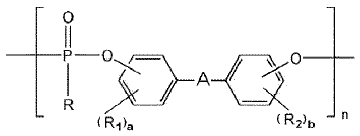 (where A represents a single bond, C1 to C5 alkylene, C1 to C5 alkylidene, C5 to C6 cycloalkylidene, -S- or ―SO2-, R is a C1 to C10 alkyl group, a C6 to C20 aryl group or a C6 to C20 aryloxy group, R₁ and R₂ each independently represent a substituted or unsubstituted C1 to C6 alkyl group, a substituted or unsubstituted C3 to C6 cycloalkyl group, a substituted or unsubstituted C6 to C12 aryl group or a halogen atom, a and b are the same or different and are each independently an integer from 0 to 4, and n represents an integer from 5 to 2,000), k represents an integer from 0 to 10, and m represents an integer from 3 to 10.

2. The cross-linked polyphosphonate of claim 1, wherein the cross-linked polyphosphonate has a solubility of 0 to 0.0001 g/10ml in tetrahydrofuran when deposited at 25°C for 17 hours.

3. The cross-linked polyphosphonate of claim 1 or 2, wherein the cross-linked polyphosphonate has a weight average molecular weight of 1,000 to 300,000 g/mol.

4. The cross-linked polyphosphonate of any of claims 1 to 3, wherein Q is present in an amount of 50 to 98 wt% in the entirety of the cross-linked polyphosphonate.

5. The cross-linked polyphosphonate of any of claims 1 to 4, wherein the cross-linked polyphosphonate is represented by Formula 1-1: 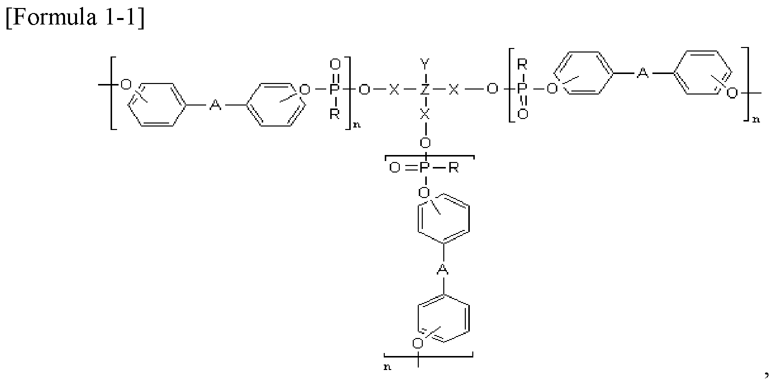 where Z represents C1 to C5 linear or branched alkyl, C5 or C6 cycloalkyl, or C6 to C20 aryl, Y represents hydrogen, C1 to C5 linear of branched alkyl, C5 or C6 cycloalkyl, or C6 to C20 aryl, each X is the same or different and is independently C1 to C5 linear or branched alkylene, C5 or C6 cycloalkylene, or C6 to C20 arylene, each A is the same or different and is independently a single bond, C1 to C5 alkylene, C1 to C5 alkylidene, C5 or C6 cycloalkylidene, -S-, or ―SO2-, each R is the same or different and is independently a C1 to C10 alkyl group, a C6 to C20 aryl group, or a C6 to C20 aryloxy group, and each n is the same or different and is independently an integer from 5 to 2,000.

6. The cross-linked polyphosphonate of any of claims 1 to 5, wherein Z comprises one or more of the following units: 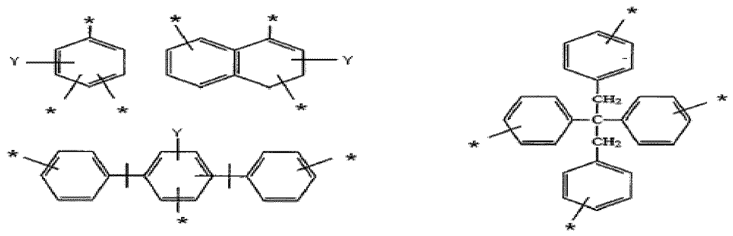 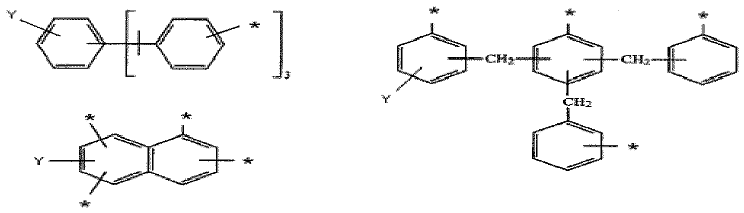 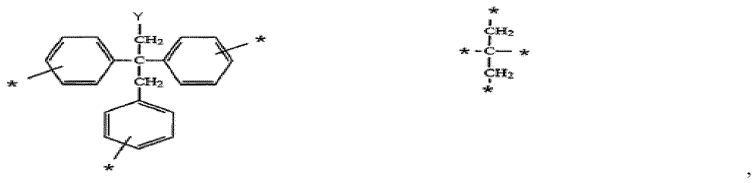 where * is

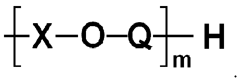

7. A method of preparing cross-linked polyphosphonate comprising a unit represented by Formula 1, comprising: polymerizing a diol represented by Formula 2 and phosphonic dichloride represented by Formula 3 with a crosslinker represented by Formula 4: 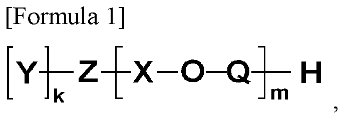 where Z represents a greater than trivalent C1 to C30 hydrocarbon residue, each Y is the same or different and is independently hydrogen, C1 to C5 linear or branched alkyl, C5 to C6 cycloalkyl or C6 to C20 aryl, each X is the same or different and is independently C1 to C5 linear or branched alkylene, C5 to C6 cycloalkylene or C6 to C20 arylene, each Q is the same or different and is independently 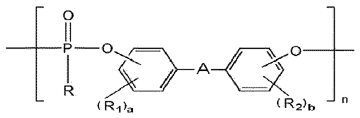 (where A represents a single bond, C1 to C5 alkylene, C1 to C5 alkylidene, C5 to C6 cycloalkylidene, -S- or ―SO2-, R is a C1 to C10 alkyl group, a C6 to C20 aryl group or a C6 to C20 aryloxy group, R₁ and R₂ each independently represent a substituted or unsubstituted C1 to C6 alkyl group, a substituted or unsubstituted C3 to C6 cycloalkyl group, a substituted or unsubstituted C6 to C12 aryl group or a halogen atom, a and b are the same or different and are each independently an integer from 0 to 4, and n represents an integer from 5 to 2,000), k represents an integer from 0 to 10, and m represents an integer from 3 to 10; 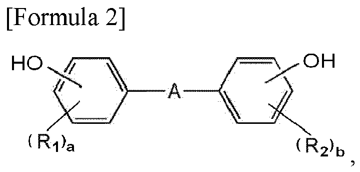 where A represents a single bond, C1 to C5 alkylene, C1 to C5 alkylidene, C5 to C6 cycloalkylidene, -S- or ―SO2-, R₁ and R₂ each independently represent a substituted or unsubstituted C1 to C6 alkyl group, a substituted or unsubstituted C3 to C6 cycloalkyl group, a substituted or unsubstituted C6 to C12 aryl group or a halogen atom, and a and b are the same or different and are each independently an integer from 0 to 4; 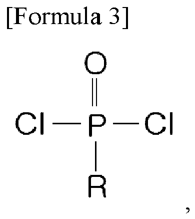 where R is a C6 to C20 aryl group or C6 to C20 aryloxy group; and 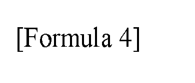 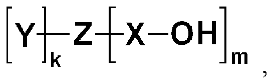 where Z represents a greater than trivalent C1 to C30 hydrocarbon residue, each Y is the same or different and is independently hydrogen, C1 to C5 linear or branched alkyl, C5 to C6 cycloalkyl or C6 to C20 aryl, each X is the same or different and is independently C1 to C5 linear or branched alkyl, C5 to C6 cycloalkyl or C6 to C20 aryl, k represents an integer from 0 to 10, and m represents an integer from 3 to 10.

8. The method of claim 7, wherein the crosslinker is reacted with the phosphonic dichloride in an equivalent ratio of 0.01 ~ 1 to 1.

9. The method of claim 7 or 8, wherein the polymerization is carried out in the presence of a basic catalyst.

10. The method of any of claims 7 to 9, wherein the polymerization is carried out by interfacial polymerization in the presence of at least one catalyst comprising tetrabutylammonium iodide, tetrabutylammonium bromide and benzyltriphenylphosphonium chloride or a combination thereof.

11. The method of any of claims 7 to 10, further comprising adjusting a terminal group with a phenolic compound.

12. The method of claim 11, wherein the phenolic compound is reacted with the phosphonic dichloride in an equivalent ratio of 0.03 ~ 0.3 to 1.

13. A flame retardant thermoplastic resin composition comprising the cross-linked polyphosphonate of any one of claims 1 to 6.

14. The flame retardant thermoplastic resin composition of claim 13, wherein the composition comprises 0.01 to 30 parts by weight of the cross-linked polyphosphonate based on 100 parts by weight of thermoplastic resin.

15. The flame retardant thermoplastic resin composition of claim 13 or 14, wherein the flame retardant thermoplastic resin composition has an IZOD impact strength of 80 kgf· cm/cm or more as measured on a 1/8" thick specimen according to ASTM D256, a total combustion time of less than 3 seconds as measured on a 1/8" thick specimen according to UL-94, and a Vicat softening temperature (VST) of 150°C or higher as measured using a 5 kg weight according to ISO R 306.
